# EUROPÄISCHE PATENTSCHRIFT

(11) **EP 0 419 721 B1**
(45) Veröffentlichungstag und Bekanntmachung des Hinweises auf die Patenterteilung: **22.03.1995**
(21) Anmeldenummer: 89118080.4
(22) Anmeldetag: 29.09.1989
(51) Int. Cl.: G06F 15/16, G05B 19/05

(54) **Kommunikationssystem für miteinander verbundene speicherprogrammierbare Steuerungen**
Communication system for programmable logic controllers linked to each other
Système de communication pour automates programmables reliés entre eux

(43) Veröffentlichungstag der Anmeldung: 03.04.1991
(73) Patentinhaber: SIEMENS AKTIENGESELLSCHAFT, 80333 München (DE)
(72) Erfinder: Bechstein, Norbert, D-8552 Höchstadt a.d.Aisch (DE); Pulletz, Klaus, Dipl.Wi.-Ing., D-8500 Nürnberg (DE); Grabe, Wolfgang, Dipl.-Ing., D-8521 Weisendorf (DE)

(56) Entgegenhaltungen:
- MESURES, Band 49, Nr. 6, 16. Avril 1984, Seiten 7,9-12,14,21,25, Paris, FR;"Les automates programmables ont désormais leurs réseaux locaux"
- ELEKTRONIK, Band 31, Nr. 2, 29. Januar 1982, Seiten 87-95, München, DE; H.SCHMID: "Multi-Mikroprozessor-Systeme"
- ANGEWANDTE INFORMATIK/APPLIED INFORMATICS, Band 29, Nr. 12, Dezember 1987,Seiten 501-508, Wiesbaden, DE; L. KRINGS et al.: "Mehrprozessorsysteme: Erfahrungen aus dem M5PS-Projekt"
- IBM TECHNICAL DISCLOSURE BULLETIN, Band 22, Nr. 7, Dezember 1979, Seiten 2893-2895, New York, US; R.C. SUMMERS et al.: "Message-based protocol for interprocessor communication"

## Beschreibung

Um die Leistungsfähigkeit von speicherprogrammierbaren Steuerungen zu steigern, werden diese dezentral eingesetzt. Kleine lokal verteilte Einheiten nehmen dabei jeweils spezielle Aufgaben zur Steuerung industrieller Prozesse wahr. Wenn dabei die Lösung von Aufgaben bzw. der Bearbeitungsstand von einzelnen speicherprogrammierbaren Steuerungen auch für andere speicherprogrammierbare Steuerungen von Bedeutung ist, müssen diese untereinander kommunizieren, d.h. Daten austauschen, können. Je nach Anwendungsfall wird man an das verwendete Kommunikationssystem unterschiedliche Anforderungen stellen. So ist beispielsweise bei der Bürokommunikation eine möglichst schnelle Datenübertragung nicht von besonderer Bedeutung, während die Steuerung von industriellen Prozessen meist eine Echtzeit-Datenverarbeitung erfordert.

Die Verbindung oder Vernetzung der speicherprogrammierbaren Steuerungen untereinander kann über parallele oder serielle Kopplung oder über Bussysteme erfolgen. In der Zeit, in der die verbundenen speicherprogrammierbaren Steuerungen untereinander Daten austauschen, sind diese einschließlich des dafür vorgesehenen Bussystems für andere Aufgaben blockiert. Zusätzlich müssen bei der Datenübertragung noch Maßnahmen getroffen werden, die den dafür notwendigen Zeitaufwand erhöhen. Solche Maßnahmen sind beispielsweise die Erkennung von Datenverlusten, worauf erneute Datenübertragungen vorgenommen werden müssen, sowie das Erkennen eines Ausfalls von speicherprogrammierbaren Steuerungen. Ungültige Daten müssen einen definierten Zustand aufweisen, eine Interruptbehandlung von wichtigen Daten ist vorzusehen, und es müssen Testfunktionen vorhanden sein, die dem Anwender den Zustand aller Datenelemente liefern. Außerdem sollen keine sogenannten "Deadlock"-Situationen möglich sein, bei denen ein Datenaustausch infolge undefinierter Datenzustände unterbleibt.

Aufgabe der Erfindung ist es, ein Betriebsverfahren zu schaffen, das unter Beachtung aller genannten Anforderungen einen sehr schnellen Datenaustausch von verbundenen Datenverarbeitungsanlagen ermöglicht.

Diese Aufgabe wird durch ein Betriebsverfahren für über ein Leitungssystem miteinander verbundene speicherprogrammierbare Steuerungen gelöst,
a) bei dem aus der Gesamtmenge der speicherprogrammierbaren Steuerungen eine Teilmenge auswählbar ist,
b) bei dem für diese speicherprogrammierbaren Steuerungen ein Gesamtspeicherbereich vorgebbar ist,
c) bei dem jeder dieser speicherprogrammierbaren Steuerungen ein Teilspeicherbereich mit Speicherplätzen aus dem Gesamtspeicherbereich zuteilbar ist,
d) bei dem jeder dieser speicherprogrammierbaren Steuerungen bestimmte Speicherplätze aus dem Gesamtspeicherbereich vorgebbar sind, die nur von dieser speicherprogrammierbaren Steuerung beschrieben werden können,
e) bei dem jede dieser speicherprogrammierbaren Steuerungen alle Daten des Gesamtspeicherbereichs lesen kann,
f) bei dem während des Betriebs der speicherprogrammierbaren Steuerungen eine Datenübertragung an einen jeweiligen Teilspeicherbereich einer speicherprogrammierbaren Steuerung nur dann vorgenommen wird, wenn eine Datenänderung vorliegt.

Aus dem Artikel "Multi-Mikroprozessor-Systeme" von H. Schmid, Elektronik, Heft 2, 1982, Seiten 87 bis 95, ist zwar bereits ein Betriebsverfahren für miteinander verbundene Rechner bekannt, denen ein Gesamtspeicherbereich vorgebbar ist, wobei jedem Rechner ein Teilspeicherbereich mit Speicherplätzen aus dem Gesamtspeicherbereich zuteilbar ist und wobei jedem am Betriebsverfahren beteiligten Rechner bestimmte Speicherplätze aus dem Gesamtspeicherbereich vorgebbar sind, die nur von ihm beschrieben werden können, während jeder Rechner alle Daten des Gesamtspeicherbereichs lesen kann. Aus der genannten Literaturstelle geht jedoch nicht hervor, daß es sich bei den Rechnern auch um speicherprogrammierbare Steuerungen handeln kann. Es geht auch weder hervor, ob aus der Gesamtmenge der über ein Leitungssystem miteinander verbundenen Rechner eine Teilmenge auswählbar ist, noch, ob während des Betriebs der Rechner eine Datenübertragung an einen jeweiligen Teilspeicherbereich nur dann vorgenommen wird, wenn eine Datenänderung vorliegt.

Vorteilhafte Ausführungsarten des Verfahrens sind Gegenstand der Unteransprüche.

Ein Ausführungsbeispiel der Erfindung wird im folgenden anhand einer Zeichnung näher erläutert. Dabei zeigen:
- FIG 1: über ein Bussystem verbundene speicherprogrammierbare Steuerungen,
- FIG 2: einen Gesamtspeicherbereich,
- FIG 3: eine Aufteilung des Gesamtspeicherbereichs in Teilspeicherbereiche,
- FIG 4: über ein Bussystem verbundene speicherprogrammierbare Steuerungen mit einem Gesamtspeicher,
- FIG 5 und 6: Kommunikationstelegramme für die Datenübertragung.

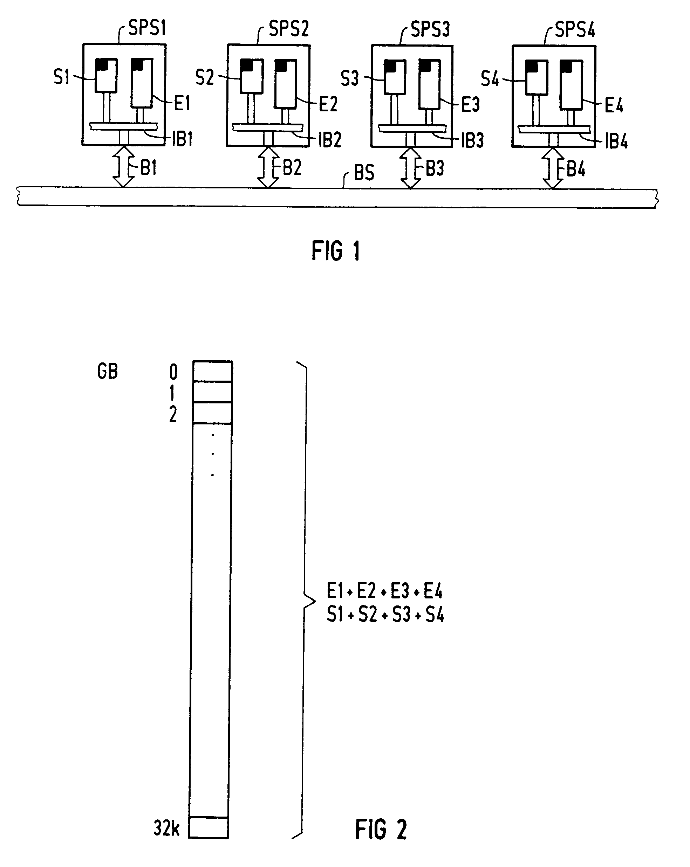

FIG 1 zeigt vier speicherprogrammierbare Steuerungen SPS1... SPS4. Jede speicherprogrammierbare Steuerung SPS1...SPS4 weist jeweils zwei Speicher auf, die in der oberen linken Ecke durch ein schwarzes Kästchen symbolisiert sind. Dabei stellt jeweils ein Speicher die Empfangsperipherie E1...E4 und ein Speicher die Sendeperipherie S1...S4 einer jeweiligen speicherprogrammierbaren Steuerung SPS1...SPS4 dar. Die Sende- und Empfangsperipherien S1...S4, E1...E4 sind jeweils an den internen Bus IB1... IB4 einer speicherprogrammierbaren Steuerung SPS1...SPS4 angeschlossen. An diesen internen Bus können auch die anderen Elemente einer derartigen Steuerung wie beispielsweise ein Prozessor, Ein-Ausgangsbausteine, ein Betriebssystemspeicher, usw. angeschlossen sein. Diese Elemente sind jedoch der Übersichtlichkeit halber nicht dargestellt.

Bei den speicherprogrammierbaren Steuerungen SPS1...SPS4 kann es sich um völlig unterschiedliche Einrichtungen bzw. Geräte handeln. Beispielsweise könnte eine speicherprogrammierbare Steuerung Teil einer Großrechneranlage sein, und eine andere speicherprogrammierbare Steuerung könnte ein Einplatinen-Steuergerät mit minimalem Aufbau sein. Die speicherprogrammierbaren Steuerungen SPS1...SPS4 könnten beispielsweise Einrichtungen zur Automatisierung technischer Prozesse wie Sensoren, Aktoren, Meßumformer, Feldmultiplexer und Feldregler steuern.

Die speicherprogrammierbaren Steuerungen SPS1...SPS4 sind über die Busse B1...B4 an ein gemeinsames Bussystem BS angeschlossen. An dieses Bussystem BS können auch weitere, in FIG 1 nicht gezeigte, Datenverarbeitungsanlagen angeschlossen werden, die wahlweise an dem Betriebsverfahren teilnehmen könnten. Es können also auch Datenverarbeitungsanlagen angeschlossen sein, die an dem Betriebsverfahren der speicherprogrammierbaren Steuerungen SPS1...SPS4 nicht teilnehmen, die jedoch das gleiche Bussystem BS benützen.

Die für die Sendeperipherie S1...S4 und für die Empfangsperipherie E1...E4 vorgesehenen Speicherplätze können Speicherplätze von speziellen Speicherbausteinen der speicherprogrammierbaren Steuerungen SPS1...SPS4 sein, sie können jedoch auch Speicherplätze eines Gesamtspeicherbereichs einer jeweiligen speicherprogrammierbaren Steuerung SPS1...SPS4 darstellen. Für das Betriebsverfahren ist es lediglich wichtig, daß bestimmte Speicherplätze der Sende- und der Empfangsperipherie S1...S4, E1...E4 zugeordnet werden. Natürlich müssen diese Speicherplätze hardwaremäßig realisiert werden, die Art und Weise ihrer Realisierung bleibt jedoch dem Fachmann anheimgestellt.

Die Sende- und Empfangsperipherien S1...S4, E1...E4 der speicherprogrammierbaren Steuerungen SPS1...SPS4 stellen eine Anzahl von Speicherplätzen dar, die zusammen einen Gesamtspeicherbereich ergeben. Dieser Gesamtspeicherbereich sei anhand von FIG 2 näher erläutert.

FIG 2 zeigt den Gesamtspeicherbereich GB. Der Gesamtspeicherbereich GB umfaßt die Speicherplätze der Sende- und Empfangsperipherien S1...S4, E1...E4 der speicherprogrammierbaren Steuerungen SPS1...SPS4. Damit ergibt sich der Gesamtspeicherbereich GB aus den Speicherbereichen der Empfangsperipherien E1 und E2 und E3 und E4 sowie der Sendeperipherien S1 und S2 und S3 und S4. Im Ausführungsbeispiel gemäß FIG 2 weist der Gesamtspeicherbereich GB Speicherplätze von 0...32 kBit auf. Dieser Gesamtspeicherbereich GB steht dem Anwender des Betriebsverfahrens zur Verfügung und kann von ihm je nach Anwendungsfall auf die einzelnen am Betriebsverfahren beteiligten speicherprogrammierbaren Steuerungen SPS1...SPS4 vergeben werden.

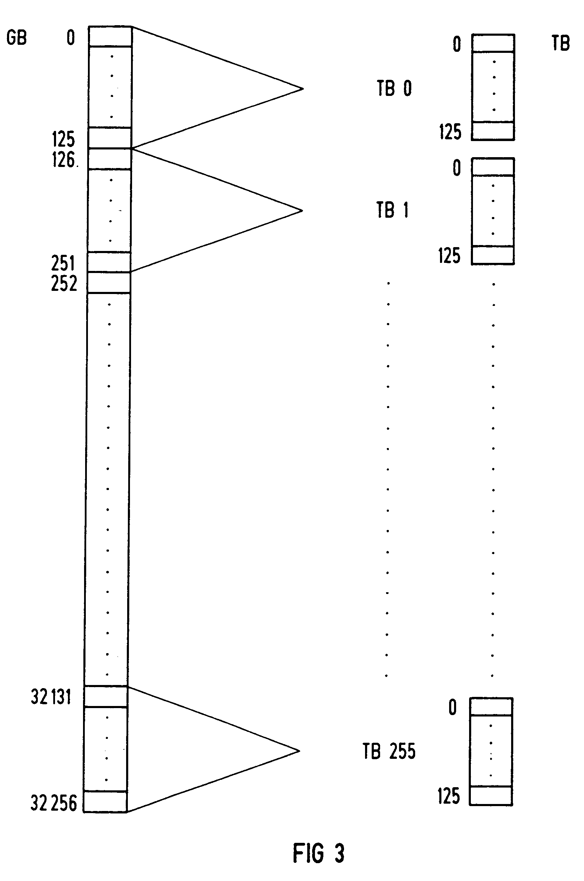

Nach dieser Ausführungsform der Erfindung muß der Anwender bei der Inbetriebnahme des Betriebsverfahrens die Speicherplätze für die Sende- und Empfangsperipherie S1...S3, E1...E4 aus dem ihm zur Verfügung stehenden Gesamtbereich GB vergeben. Nach einer modifizierten Ausführungsform der Erfindung kann einer jeweiligen speicherprogrammierbaren Steuerung SPS1... SPS4 jedoch auch eine feste Anzahl von Speicherplätzen zugeordnet werden. Dies wird im folgenden anhand von FIG 3 näher erläutert.

FIG 3 zeigt die Aufteilung des Gesamtspeicherbereichs GB in Teilspeicherbereiche TB1...TB255. Der Gesamtspeicherbereich GB verfügt im Ausführungsbeispiel über insgesamt 32257 (0...32256) Speicherplätze. Jeder der Teilspeicherbereiche TB1...TB255 verfügt über 126 Speicherplätze (0...125) und ist einer speicherprogrammierbaren Steuerung fest zugeordnet. Im vorliegenden Ausführungsbeispiel würden beispielsweise die Teilspeicherbereiche TB1...TB4 den speicherprogrammierbaren Steuerungen SPS1...SPS4 fest zugeordnet sein, während die übrigen Teilspeicherbereiche TB0,TB5...TB255 nicht vergeben werden. Dies ist jedoch kein unnützer Aufwand an Speicherplätzen, da der Gesamtspeicherbereich GB ja nicht in Form von tatsächlich hardwaremäßig vorhandenen Speicherplätzen zur Verfügung stehen muß, sondern lediglich als imaginärer und bei Bedarf projektierbarer Speicherbereich vorhanden ist.

Die den speicherprogrammierbaren Steuerungen SPS1...SPS4 fest zugeordneten Teilspeicherbereiche TB1...TB4 existieren bei diesen in Form von jeweils 126 (0-125) Speicherplätzen. Diese 126 Speicherplätze einer speicherprogrammierbaren Steuerung lassen sich nun wieder entweder fest oder beliebig vorgebbar in Speicherplätze für die Sendeperipherie S1...S4 und in Speicherplätze für die Empfangsperipherie E1...E4 aufteilen.

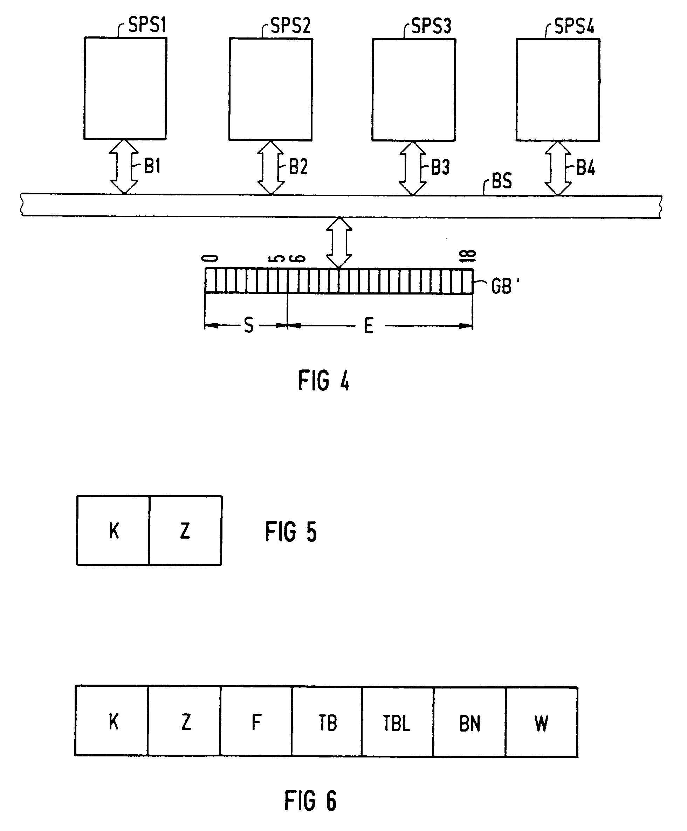

Nachdem die Aufteilung des Gesamtspeicherbereichs GB in die Teilspeicherbereiche TB beschrieben wurde, ist es für das Verständnis des im folgenden zu beschreibenden Betriebsverfahrens einfacher, wenn man von der Vorstellung ausgeht, daß die jeweiligen Sende- und Empfangsperipherien S1...S4, E1...E4 einer speicherprogrammierbaren Steuerung SPS1...SPS4 zu einem Gesamtspeicherbereich GB′ gemäß FIG 4 zusammengefaßt sind.

FIG 4 zeigt die speicherprogrammierbaren Steuerungen SPS1... SPS4, die mit dem Bussystem BS über die Busse B1...B4 verbunden sind. Am Bussystem BS ist nun symbolisch der Gesamtspeicherbereich GB′ angeschlossen, der in eine Sende- S und in eine Empfangsperipherie E aufgeteilt ist. Die Sende- und Empfangsperipherie S, E des Gesamtspeicherbereichs GB′ setzt sich dabei aus den Sende- und Empfangsperipherien S1...S4, E1...E4 gemäß FIG 1 zusammen. Im Ausführungsbeispiel verfügt der Gesamtspeicherbereich GB′ über insgesamt 18 Speicherplätze, wobei der Sendeperipherie S die Speicherplätze 0...5 und der Empfangsperipherie E die Speicherplätze 6...18 zugeordnet sind. Jeder Speicherplatz 0...18 des Gesamtspeicherbereichs GB′ darf dabei nur von einer speicherprogrammierbaren Steuerung SPS1...SPS4 beschrieben werden, während jeder Speicherplatz 0...18 von jeder speicherprogrammierbaren Steuerung SPS1...SPS4 gelesen werden kann. Bei der Inbetriebnahme der speicherprogrammmierbaren Steuerungen wird der Gesamtspeicherbereich GB′ zunächst vollständig beschrieben. Während des Betriebsverfahrens jedoch wird nur eine sogenannte intelligente Änderungensübertragung vorgenommen. Dies bedeutet, daß grundsätzlich nur jeweils geänderte Daten zwischen den einzelnen Datenverarbeitungsanlagen übertragen werden.

Angenommen, die dritte speicherprogrammierbare Steuerung SPS3 steuere einen industriellen Prozeß, wobei sie zyklisch jeweils 4 Ventilstellungen abfragt. Von diesen 4 Ventilstellungen seien die erste, die dritte und die vierte für die erste speicherprogrammierbare Steuerung SPS1 wichtig. Hat sich nun die erste, die zweite und die dritte Ventilstellung geändert, so werden lediglich die Daten der ersten und der dritten Ventilstellung in die Sendeperipherie S3, die Teil der Sendeperipherie S ist, der dritten speicherprogrammierbaren Steuerung SPS3 geschrieben und mit einem Änderungstelegramm - auf das weiter unten noch eingegangen wird - an die Empfangsperipherie E1, die Teil der Empfangsperipherie E ist, der ersten speicherprogrammierbaren Steuerung SPS1 gesendet.

Komplette Datensätze werden von speicherprogrammierbaren Steuerungen SPS1...SPS4 dagegen nur in der Anlaufphase oder bei der internen Fehlerbehandlung übertragen. Damit wird eine hohe Übertragungsgeschwindigkeit erreicht.

Zur Übertragung der Daten über das Bussystem BS ist es für die Erfindung besonders vorteilhaft, folgende vier verschiedene Typen von Datentelegrammen zu definieren. Diese sind ein Leertelegramm, ein Änderungstelegramm, ein Volltelegramm und ein Anforderungstelegramm.

Ein Änderungstelegramm wird normalerweise im laufenden Betrieb gesendet, falls sich in der Sendeperipherie S der Inhalt eines oder mehrerer Speicherplätze geändert hat. Da nicht jeweils der gesamte Inhalt der Sendeperipherie S gesendet wird, wird dadurch der Zeitaufwand in minimalen Grenzen gehalten.

Ein Anforderungstelegramm wird von einer speicherprogrammierbaren Steuerung SPS1...SPS4 dann angefordert, wenn diese einen Telegrammverlust festgestellt hat oder wenn sich eine der speicherprogrammierbaren Steuerungen SPS1...SPS4 in der Anlaufphase befindet.

Volltelegramme dienen dazu, neu anlaufende speicherprogrammierbare Steuerungen SPS1...SPS4 möglichst schnell auf den aktuellen Stand der Sendeperipherie S1...S4 zu bringen. Für den Fall, daß eine speicherprogrammierbare Steuerung SPS1...SPS4 den Verlust eines Telegramms erkennt, kann sie den entsprechenden Sender über ein Anforderungstelegramm auffordern, ein Volltelegramm zu senden.

Wesentliches Merkmal eines Volltelegramms ist, daß es das Abbild einer Sendeperipherie S1...S4 eines Teilnehmers darstellt. Der Stand dieses Abbildes entspricht dem Zeitpunkt des Sendens des letzten Änderungstelegramms oder des Initialisierungszustandes des Senders. Dies bedeutet, daß ein Teilnehmer der alle Änderungstelegramme des Senders empfangen konnte, durch ein Eintreffen des Volltelegramms keine neuen Informationen bekommt. Daraus ergibt sich, daß Volltelegramme aus Empfängersicht nur relevant sind, falls sich dieser entweder in der Anlaufphase befindet oder falls er einen Telegrammverlust erkannt hat.

Ein Leertelegramm wird dazu benutzt, mögliche Telegrammverluste der Typen Änderungstelegramm und Volltelegramm im System erkennen zu können. Möglich sind diese Verluste deshalb, weil beide genannten Typen mittels des "unconfirmed"-Service übertragen werden, was den Vorteil hat, daß damit das Telegramm an alle Busteilnehmer gleichzeitig gesendet werden kann.

Leertelegramme werden immer nach einem Änderungs- oder Volltelegramm gesendet. Zusätzlich werden Leertelegramme zyklisch immer dann gesendet, wenn nach dem letzten Leer-, Änderungs- oder Volltelegramm die "Leerlaufzeit" abgelaufen ist. Die Leerlaufzeit stellt dabei einen Kompromiß zwischen einer zusätzlichen Busbelastung durch Leertelegramme auf der einen Seite und der Reaktionszeit, einen doppelten Telegrammverlust erkennen zu können, auf der anderen Seite dar.

Die Figuren 5 und 6 symbolisieren die beschriebenen Telegrammtypen. Die ersten beiden Symbole eines jeweiligen Telegramms sind in Form von zwei Bytes realisiert, wobei das erste Byte eine Kennung K darstellt und das zweite Byte eine Zyklusnummer Z. Die Kennung K teilt einer jeweiligen speicherprogrammierbaren Steuerung SPS1...SPS4 die Art des Telegramms mit, also um welchen der insgesamt 4 Telegrammtypen es sich handelt. Die Zyklusnummer Z teilt der speicherprogrammierbaren Steuerung SPS1...SPS4 die Nummer des jeweiligen Telegramms mit. Da eine jeweilige speicherprogrammierbare Steuerung SPS1...SPS4 die Nummer des jeweils vorhergehenden Telegrammtyps kennt, kann sie feststellen, ob zwischen dem neuen Telegramm und dem letzten Telegrammtyp ein Datenverlust stattgefunden hat, d.h. ob ein Telegramm zwischendurch verlorengegangen ist. Diese beiden Bytes sind für ein Leertelegramm und ein Anforderungstelegramm ausreichend (FIG 5).

FIG 6 symbolisiert die Telegrammtypen Änderungstelegramm und Volltelegramm. Neben der bereits beschriebenen Kennung K und der Zyklusnummer Z enthält das Änderungstelegramm ein Fehlerbyte F, das dem Empfänger eines Telegramms einen Fehler des Senders mitteilt.

Innerhalb der Änderungs- und Volltelegramme werden die Speicherplätze entsprechend ihrer Teilspeicherbereichszugehörigkeit geordnet. Ein Teilspeicherbereich TB darf zwar nicht vorhanden, aber innerhalb eines Telegramms nicht doppelt adressiert sein.

Zusätzlich wird noch die Teilspeicherbereichlänge TBL, sowie die Speicherplatznummer BN (Bytenummer) und der Wertebereich W gesendet. Die Speicherplatznummer BN gibt an, um das wievielte Byte es sich innerhalb eines Teilspeicherbereichs TB handelt. Das Feld "Wert" enthält den aktuellen Wert des durch das Feld "Teilbereich TB" und die Speicherplatznummer BN adressierten Bytes.

## Patentansprüche

1. Betriebsverfahren für über ein Leitungssystem miteinander verbundene speicherprogrammierbare Steuerungen,
a) wobei aus der Gesamtmenge der speicherprogrammierbaren Steuerungen (SPS1...SPS4) eine Teilmenge auswählbar ist,
b) wobei für diese speicherprogrammierbaren Steuerungen (SPS1...SPS4) ein Gesamtspeicherbereich (GB) vorgebbar ist,
c) wobei jeder dieser speicherprogrammierbaren Steuerungen (SPS1...SPS4) ein Teilspeicherbereich (TB) mit Speicherplätzen (0...18) aus dem Gesamtspeicherbereich (GB) zuteilbar ist,
d) wobei jeder dieser speicherprogrammierbaren Steuerungen (SPS1...SPS4) bestimmte Speicherplätze (0...18) aus dem Gesamtspeicherbereich (GB) vorgebbar sind, die nur von dieser speicherprogrammierbaren Steuerung (SPS1...SPS4) beschrieben werden können,
e) wobei jede dieser speicherprogrammierbaren Steuerungen (SPS1...SPS4) alle Daten des Gesamtspeicherbereichs (GB) lesen kann,
f) wobei während des Betriebs der speicherprogrammierbaren Steuerungen (SPS1...SPS4) eine Datenübertragung an einen jeweiligen Teilspeicherbereich (TB0...TB255) einer speicherprogrammierbaren Steuerung (SPS1...SPS4) nur dann vorgenommen wird, wenn eine Datenänderung vorliegt.

2. Verfahren nach Anspruch 1, **dadurch gekennzeichnet,** daß während einer Anlaufphase eine Datenübertragung an einen jeweiligen Teilspeicherbereich (TB0... TB255) einer speicherprogrammierbaren Steuerung (SPS1...SPS4) vornehmbar ist.

3. Verfahren nach Anspruch 1 oder 2, **dadurch gekennzeichnet,** daß auf Anforderung einer speicherprogrammierbaren Steuerung (SPS1...SPS4) eine Datenübertragung an einen jeweiligen Teilspeicherbereich (TB0...TB255) einer speicherprogrammierbaren Steuerung (SPS1...SPS4) vornehmbar ist.

4. Verfahren nach einem der vorstehenden Ansprüche, **dadurch gekennzeichnet,** daß jeder dieser speicherprogrammierbaren Steuerungen (SPS1...SPS4) ein Teilspeicherbereich (TB0...TB255) aus dem Gesamtspeicherbereich (GB) nach Bedarf zuteilbar ist.

5. Verfahren nach einem der Ansprüche 1 bis 3, **dadurch gekennzeichnet,** daß jeder dieser speicherprogrammierbaren Steuerungen (SPS1...SPS4) ein bestimmter Teilspeicherbereich (TB0...TB255) aus dem Gesamtspeicherbereich (GB) fest zuteilbar ist.

## Claims

1. Operating process for programmable logic controllers interconnected via a line system, in which
a) a proportion of the total number of programmable logic controllers (SPS1....SPS4) can be selected,
b) a total memory area (GB) can be preset for these programmable logic controllers (SPS1...SPS4),
c) a partial memory area (TB) with memory locations (0...18) within the total memory area (GB) can be assigned to each of these programmable logic controllers (SPS1...SPS4),
d) certain memory locations (0...18) within the total memory area (GB) can be preset for each of these programmable logic controllers (SPS1...SPS4), such that they can be written to only by these programmable logic controllers (SPS1...SPS4),
e) each of these programmable logic controllers (SPS1...SPS4) can read all data in the total memory area (GB),
f) during the operation of the programmable logic controllers (SPS1...SPS4), data transmission to a respective partial memory area (TB0...TB255) of a programmable logic controller (SPS1...SPS4) is only effected when a data change has occurred.

2. Process according to Claim 1, characterised in that during a start-up phase, a data transmission can be made to a respective partial memory area (TB0...TB255) of a programmable logic controller (SPS1...SPS4).

3. Process according to Claim 1 or 2, characterised in that a data transmission can be made to a respective partial memory area (TB0...TB255) of a programmable logic controller (SPS1...SPS4) at the request of a programmable logic controller (SPS1...SPS4).

4. Process according to one of the preceding Claims, characterised in that a partial memory area (TB0...TB255) within the total memory area (GB) can be assigned to each of these programmable logic controllers (SPS1...SPS4) on request.

5. Process according to one of the Claims 1 to 3, characterised in that a specific partial memory area (TB0...TB255) within the total memory area (GB) can be permanently assigned to each of these programmable logic controllers (SPS1...SPS4).

## Revendications

1. Procédé d'exploitation pour des unités de commande, qui sont programmables en mémoire et sont reliées entre elles par l'intermédiaire d'un système de lignes, selon lequel
a) une partie des unités de commande (SPS1... SPS4) programmables en mémoire peut être sélectionnée à partir de l'ensemble de ces unités de commande,
b) une zone de l'ensemble de la zone de mémoire (GB) peut être prédéterminée pour ces unités de commande (SPS1...SPS4) programmables en mémoire,
c) à chacune de ces unités de commande (SPS1...SPS4) programmables en mémoire peut être affectée une zone de mémoire partielle (TB) comportant des emplacements de mémoire (0...18) faisant partie de l'ensemble de la zone de mémoire (GB),
d) pour chacune de ces unités de commande (SPS1...SPS4) programmables en mémoire peuvent être prédéterminées, à partir de l'ensemble de la zone de mémoire (GB), des emplacements de mémoire déterminés (0...18), qui peuvent être enregistrés uniquement par cette unité de commande (SPS1...SPS4) programmable en mémoire,
e) chacune de ces unités de commande (SPS1...SPS4) programmable en mémoire peut lire toutes les données de l'ensemble de la zone de mémoire (GB),
f) pendant le fonctionnement des unités de commande (SPS1... SPS4) programmables en mémoire, une transmission de données à une zone respective de mémoire partielle (TB0...TB255) d'une unité de commande (SPS1...SPS4) programmable en mémoire n'est exécutée que lorsqu'une modification de données est présente.

2. Procédé suivant la revendication 1, caractérisé par le fait que pendant une phase de démarrage, une transmission de données peut être réalisée dans une zone de mémoire partielle respective (TB0...TB255) d'une unité de commande (SPS1...SPS4) programmable en mémoire.

3. Procédé suivant la revendication 1 ou 2, caractérisé par le fait que sur la demande d'une unité de commande (SPS1...SPS4) programmable en mémoire, une transmission de données peut être exécutée en direction d'une zone de mémoire partielle respective (TB0...TB255) d'une unitéé de commande (SPS1...SPS4) programmable en mémoire.

4. Procédé suivant l'une des revendications précédentes, caractérisé par le fait qu'à chacune de ces unités de commande (SPS1...SPS4) programmables en mémoire peut être affectée, le cas échéant, une zone de mémoire partielle (TB0...TB255) provenant de l'ensemble de la zone de mémoire (GB).

5. Procédé suivant l'une des revendications 1 à 3, caractérisé par le fait qu'à chacune de ces unités de commande (SPS1...SPS4) programmables en mémoire, peut être associée de façon fixe une zone de mémoire partielle déterminée (TB0...TB255) à partir de l'ensemble de la zone de mémoire (GB).
